# EUROPÄISCHE PATENTANMELDUNG

(11) **EP 2 151 319 A1**
(43) Veröffentlichungstag der Anmeldung: **10.02.2010**
(21) Anmeldenummer: 08014174.0
(22) Anmeldetag: 08.08.2008
(51) Int. Cl.: B32B 25/14, B32B 27/08, B32B 33/00, B65D 39/00, B29C 47/06, A61J 1/14

(54) **Stopfen zum Verschliessen eines medizinischen Systems**

(71) Anmelder: PolyCine GmbH, 66578 Schiffsweiler (DE)
(72) Erfinder: Nicola, Thomas, 57350 Spichern (FR)
(74) Vertreter: Hörschler, Wolfram Johannes

(57) **Zusammenfassung**

Die vorliegende Erfindung betrifft einen zylinderförmigen Stopfen zum Verschließen eines medizinischen Systems, ein Verfahren zum Verschließen eines medizinischen Systems, sowie das medizinische System selbst, das mit dem erfindungsgemäßen Stopfen verschlossen ist.

## Beschreibung

Die vorliegende Erfindung betrifft einen Stopfen zum Verschließen eines medizinischen Systems, ein Verfahren zum Verschließen eines medizinischen Systems, sowie das medizinische System selbst, das mit dem erfindungsgemäßen Stopfen verschlossen ist.

Medizinische Systeme wie medizinische Beutel werden millionenfach in der Medizin eingesetzt und dienen der Aufbewahrung von Blut oder Infusionslösungen. Zu diesem Zweck müssen sie vollkommen steril sein, was üblicherweise durch eine Erhitzung auf wenigstens 100° C, insbesondere auf etwa 121° C erzielt wird. Darüber hinaus muss ein derartiger Beutel leicht, billig und in einem automatischen Herstellungsprozess herzustellen sein und wegen seines geringen Wertes nach dem Gebrauch wegwerfbar sein.

Typische medizinische Beutel sind in der US-A 4,516,977 offenbart. In dieser Druckschrift werden Beutel aus Kunststoffmaterialien auf Polyolefinbasis offenbart, unter anderem auf Basis von Polyethylen, -propylen und -butylen. Neben diesen Homopolymeren werden auch solche Kunststoffmaterialien genannt, die substituierte Olefine darstellen, beispielsweise Methyl-, Ethyl-, Vinyl- oder Halogenatom-Substituenten tragen. Auch Copolymere oder Blends aus entsprechenden Materialien werden hier vorgeschlagen. Als insbesondere bevorzugt für den Beutel werden Polyethylene mit mittlerer bis hoher Dichte, hohem Molekulargewicht und enger Molekulargewichtsverteilung angegeben. Um den Inhalt der Beutel ablaufen zu lassen oder auch die Beutel befüllen zu können, werden beispielsweise Einsatzstücke verwendet, die den Zugang zum Inneren des Beutels ermöglichen.

Solche Einsatzstücke sind bereits in verschiedener Ausführung bekannt und beispielsweise in der DE 33 05 365 C2 und der DE 196 34 944 C1 beschrieben. Um die Beutel zu befüllen, werden dabei allgemein zwei Produktionsverfahren eingesetzt. Zum einen können die medizinischen Beutel zunächst mit der entsprechenden Flüssigkeit befüllt werden, die Einsatzstücke werden anschließend, d.h. nach dem Füllvorgang, in den Beutel eingeschweißt, wobei dieser gleichzeitig zur Gänze verschlossen wird. Zum anderen ist bekannt, das jeweilige Einsatzstück vor dem Füllvorgang in den medizinischen Beutel zu integrieren und die Füllung anschließend zu bewerkstelligen. Hierzu wird in der Regel eine separate Füllöffnung benutzt, die von einer Aussparung in der Randverschweißung des Folienbeutels gebildet ist und nach dem Füllen verschweißt oder versiegelt wird.

Eine weitere Möglichkeit, den medizinischen Beutel zu füllen bzw. dessen Inhalt zu entnehmen, liefern Anschlüsse, an die Schläuche angeschlossen werden können, bzw. Öffnungen, die mit einem durchstechbaren Stopfen verschlossen sind. Diese Systeme sind meist mit dem Beutelmaterial verschweißt und sind meist aufwendig herzustellen.

Der vorliegenden Erfindung liegt daher die Aufgabe zu Grunde, einen Stopfen zum Verschließen eines medizinischen Systems, beispielsweise eines Beutels, zur Verfügung zu stellen, der auf einfache Art und Weise zum festen, das heißt dauerhaften und fluiddichten Verschließen einer Öffnung dieses medizinischen Systems geeignet ist. Ferner soll der Stopfen von einer Nadel bzw. einem Spike durchstechbar sein, wodurch ein ein- oder mehrmaliges Entnehmen von Flüssigkeit aus dem medizinischen System gewährleistet werden soll. Weiterhin ist es Aufgabe der Erfindung, ein Verfahren zum einfachen und wirtschaftlichen Verschließen eines medizinischen Systems, insbesondere eines medizinischen Beutels zur Verfügung zu stellen.

Gelöst wird diese Aufgabe durch einen vorzugsweise zylinderförmigen Stopfen mit zwei gegenüberliegenden Stirnseiten zum Verschließen eines medizinischen Systems, wobei der Stopfen einen Kern sowie gegebenenfalls eine oder mehrere den Kern umgebende Schicht(en) umfasst, und der Stopfen
A einen Kern aus einem Kunststoffmaterial aus einem oder mehreren Polymeren mit einem hohen Rückstellvermögen ausgewählt aus Polyphenylenoxid, Polyethylen-Copolymeren, Ethylenvinylacetat (EVA), Styrol/Ethylen/Butylen-Block-Copolymerisat (SEB), Styrol/Ethylen/Propylen-Copolymerisat (SEP), Polypropylen (PP), medizinischem Weißöl, Styrol/Butadien/Styrol-Copolymerisat (SBS), Polybutylen (PB), Ethylen/Propylen/Dien-Kautschuk (EPDM), Ethylen/Propylen-Kunststoff und Styrol/Butadien/Styrol-Block-Polymerisat (SBS),
B gegebenenfalls eine oder mehrere Zwischenschicht(en) aus einem Kunststoffmaterial aus einem oder mehreren Polymeren ausgewählt aus funktionalisiertem Polypropylen (PP), Polyethylen (PE), funktionalisiertem Styrol/Ethylen/Butylen-Block-Copolymerisat (SEB), Polyethylen-Plastomer, Polyethylencopolymer, Ethylen/Vinylacetat (EVA), Styrol/Ethylen/Propylen-Copolymerisat (SEP), Öl, Polypropylen (PP), Polyethylen (PE), Styrol/Isopren/Styrol-Block-Copolymerisat (SIS), Polybuten (PB), und
C gegebenenfalls eine Außenschicht aus einem Kunststoffmaterial aus einem oder mehreren Polymeren ausgewählt aus Polypropylen, Polyester, Polyethylen-Plastomer, Polycarbonat, Polyethylen-Copolymer, Ethylenvinylacetat (EVA), PCCE oder SEB/SEP, PMP, PB, Weich-PVC (PVC-W) oder Mischungen dieser, umfasst,
wobei das Material des Kerns (A) bei Abwesenheit der Außenschicht (C) oder das Material der Außenschicht (C) des Stopfens bei Temperaturen von größer 90°C fließfähig ist.

Der Begriff "fließfähig" bedeutet im Rahmen der Erfindung, dass das entsprechende Material bei der angegebenen Temperatur zumindest teilweise so stark erweicht, dass es mit dem umgebenden Material eine Verbindung eingeht, die nach dem Abkühlen auf eine Temperatur, die mindestens 20°C unter der Temperatur liegt, bei der das Material fließfähig wird, dauerhaft und beständig ist.

Die Außenschicht (C) ist dabei so ausgestaltet, dass sie dem Kern (A) und ggf. der Zwischenschicht (B) eine Prozessstabilität verleiht, wodurch ein Coextrudieren der Stopfenmaterialien zu einem mehrschichtigen Strang bzw. Stopfenstrang ermöglicht wird.

Im Sinne der Erfindung ist der Begriff "hohes Rückstellvermögen" so zu verstehen, dass die Materialien des Kerns (A) des Stopfens so ausgewählt sind, dass dieser auch nach mehrmaligem Einstechen und Herausziehen einer Kanüle noch dicht abschließt.

Bevorzugte Materialien für den Kern (A) sind Polyphenylenoxid, SEPS/SEP-Copolymere, medizinisches Weißöl und Polybutylen (PB). Gemäß einer Ausführungsform der Erfindung ist der Kern A aus 20 bis 40 Gew.-% SEB, 20 bis 40 Gew.-% medizinischem Weißöl, 5 bis 15 Gew.-% Polyphenylenoxid, 10 bis 30 Gew.-% Polypropylen (PP) sowie bis zu 10 Gew.-% Füllstoff hergestellt.

Die einzelnen Schichten des Stopfens bzw. der Kern des Stopfens können ferner Füllstoffe enthalten, die dem Fachmann bekannt sind. Dies sind Stoffe wie TiO₂, SiO₂, Kreide, Kieselgur, Zinkoxid, Quarz, Talkum, sowie Mischungen dieser Stoffe. Die Füllstoffe können jeweils in einem Anteil von bis zu 10 Gew.-% in dem Kern, bzw. der Schicht (B) bzw. der Schicht (C) enthalten sein.

Der Stopfen kann ferner weitere dem Fachmann bekannte Additive enthalten, welche üblicherweise der exakten Einstellung der Materialeigenschaften auf die Bedürfnisse der jeweiligen Anwendung und der Verbesserung der chemischen und mechanischen Eigenschaften dienen. Derartige Additive umfassen Weichmacher, Antioxidantien, Gleitmittel und sind dem Fachmann auf dem Gebiet der Kunststofftechnik bekannt. Die Additive können jeweils in einem Anteil von bis zu 10 Gew.-% in dem Kern, bzw. der Schicht (B) bzw. der Außenschicht (C) enthalten sein.

Die Außenschicht (C), welche bei Temperaturen von größer 90°C fließfähig ist, enthält die nachfolgend genannten Polymere bevorzugt in den angegebenen Anteilen bezogen auf die Gesamtzusammensetzung der Außenschicht (C): Polypropylen 70 bis 100 Gew.-%, Polyethylen-Copolymer bis zu maximal 70 Gew.-%, PCCE 100 Gew.-% oder SEB/SEP bis zu 100 Gew.-%, PB 80 bis 100 Gew.-%, bis zu maximal 70 Gew.-% Ethylenvinylacetat (EVA). Bevorzugte Polymerzusammensetzungen für die Außenschicht (C) sind Polyethylen-Copolymere in Kombination mit Polypropylen; SEB/SEP in Kombination mit Polypropylen; sowie eine Mischung aus Polypropylen, SEB und Polyethylen-Copolymeren.

Gemäß einer weiteren Ausführungsform der Erfindung eignet sich der Stopfen zum Verschließen eines Beutels, insbesondere zum Verschließen eines medizinischen Beutels. Hierbei kann ein wie vorstehend beschriebener Stopfen verwendet werden, dessen Kernmaterial (A) bei Abwesenheit die Außenschicht (C) oder dessen Außenschichtmaterial (C) bei Temperaturen größer 90°C zum Fließen neigt.

Gemäß einer weiteren Ausführungsform der vorliegenden Erfindung ist die Außenschicht (C) aus etwa 100 Gew.-% Polyester, etwa 100 Gew.-% Polycarbonat oder etwa 100 Gew.-% PMP gefertigt. Dieser Stopfen eignet sich zum Verschließen eines medizinischen Systems, insbesondere eines medizinischen Beutels, wobei die zum Stopfen zeigende Fläche der Beutelfolie oder die Öffnung des medizinischen Systems ein Material umfasst, welches bei Temperaturen von größer 90°C fließfähig ist.. Hierdurch wird eine dauerhafte Verbindung zwischen Beutelfolie und Stopfen bzw. zwischen dem Schlauchport des Beutels und Stopfen gewährleistet.

Der erfindungsgemäße Stopfen kann eine Zylinder- oder Kegelform haben und eignet sich zum Verschließen eines medizinischen Systems. Hierunter werden im Rahmen der Erfindung im weitesten Sinne alle auf dem medizinisch-technischen Sektor eingesetzten Behältnisse, Gefäße, Schläuche, Beutel und zugehörige Verbindungselemente verstanden, die bei sachgerechtem und bestimmungsgemäßem Einsatz mit Körperflüssigkeiten wie Blut oder zur therapeutischen Behandlung des menschlichen Körpers gedachten Flüssigkeiten, wie etwa Infusionslösungen, in Kontakt kommen können. Bevorzugt handelt es sich bei dem System um einen Beutel, insbesondere um einen Beutel, in den ein Schlauch als Schlauchport eingeschweißt ist. Die Verwendung des Begriffs "System" gemäß der Erfindung umfasst dabei ferner eine Anordnung von wenigstens zwei Einzelteilen oder Elementen, die zum Einsatz des Systems fest und sicher miteinander verbunden sein sollen, so dass keine Gefahr für das einwandfreie Funktionieren des Systems besteht. Zu beispielhaften medizinischen Systemen gehören medizinische Beutelsysteme für Lösungen, die mit Konnektoren, Einbauteilen oder Anschlussstutzen ausgerüstet sind und mit Schläuchen, Schlauchsystemen oder Schlauchsets zu verbinden sind, um den Transport der medizinischen Lösungen zur therapeutischen Behandlung zu gewährleisten. Ferner zählen zu den medizinischen Systemen Schlauchsets selbst, welche die Verbindung von Schläuchen zu mehreren untereinander erforderlich machen, beispielsweise mit für diesen Zweck geeigneten Konnektoren oder allen anderen, dem Fachmann auf dem Gebiet der Medizintechnik geläufigen und eingesetzten Elemente.

Damit im Rahmen der Erfindung eine fluiddichte, dauerhafte Verbindung zwischen dem Stopfen und dem medizinischen System ausgebildet wird, weisen die gemäß der Erfindung zu verbindenden Einzelteile Oberflächen auf, die aus Kunststoff bestehen. Dabei genügt es, dass wenigstens bestimmte Abschnitte der jeweiligen Oberflächen der Einzelteile aus Kunststoffmaterialien bestehen, wobei die bestimmten Abschnitte zur Ausbildung der Verbindung miteinander in Kontakt befinden. Die miteinander in Kontakt befindlichen Oberflächen der Einzelteile, beispielsweise des Stopfens und des Beutels, definieren einen Kontaktbereich. Es bleibt dabei festzuhalten, dass der Kontaktbereich zumindest auf die sich berührenden Oberflächenabschnitte aus Kunststoff beschränkt ist. Erfindungsgemäß ist die fluiddichte und dauerhafte Verbindung der Einzelteile durch In-Kontakt-Bringen der Oberflächen unter gleichzeitiger Einwirkung einer Wärmebehandlung mit Temperaturen größer 90°C und anschließender Abkühlung erhältlich.

Hierunter ist zu verstehen, dass die Einzelteile beispielsweise durch In- oder Aufeinanderstecken einen Presssitz erhalten, der die sich berührenden Oberflächen der Einzelteile mit einer Kraft gegeneinander presst, die zum einen eine gewisse Formstabilität der Anordnung aus den zu verbindenden Einzelteilen vor Ausbildung der festen und dauerhaften Verbindung gewährleistet, und zum anderen diese im Kontaktbereich ausbildenden Oberflächenabschnitte der Einzelteile in innigem Materialkontakt der sich berührenden Oberflächen miteinander fixiert.

Gemäß der Erfindung wird durch geeignete Wahl und Abstimmung der die Kunststoffmaterialien im Kontaktbereich aufbauenden Polymeren eine Verbindungsanordnung geschaffen, die in einem einzigen Wärmebehandlungsvorgang, insbesondere während eines Autoklaviervorgangs, dauerhaft und sicher ausgebildet werden kann, ohne dass zusätzliche Haft-, Dichtungs- oder Versiegelungsmassen eingesetzt werden müssen. Insbesondere ist es Gegenstand der Erfindung, eine dauerhafte Verbindung zwischen einem medizinischen System, bevorzugt zwischen dem Beutelsystem und dem erfindungsgemäßen Stopfen herzustellen, die sich bei einer nachfolgenden Wärmebehandlung, insbesondere einer Hitzesterilisation und darauf folgender Abkühlung fest miteinander verbinden.

Gemäß der Erfindung können unter "Kunststoffmaterial" solche Materialien verstanden werden, deren wesentliche Bestandteile aus makromolekularen organischen Verbindungen bestehen, wobei die Kunststoffmaterialien ein oder mehrere Polymere aufweisen können oder auch einfach als Polymere bezeichnet werden können, wobei zu Polymeren insbesondere Homopolymere als auch Copolymere (auch Block- und/oder Pfropfcopolymere) sowie Mischungen (Blends oder Compounds) aus den genannten Stoffen gehören.

Ein wichtiges Kriterium für die erfindungsgemäße Auswahl und Zuordnung eines Polymers zu einem Kunststoffmaterial sowohl bei der Außenschicht (C) des Stopfens als auch bei dem medizinischen System (und zwar jeweils im Kontaktbereich), stellt die Formbeständigkeit unter Sterilisationsbedingungen (Fließfähigkeit) des Polymers da. Die Formbeständigkeit hängt im Wesentlichen von der Erweichungstemperatur, der Materialhärte der eingesetzten Stoffe ab.

Gemäß einer Ausführungsform der Erfindung enthält der Stopfen das Polymer oder die Polymermischung mit der niedrigen Erweichungstemperatur in einem Anteil von bis zu 40 Gew.-% bezogen auf das Polymer des medizinischen Beutels und weist eine im Vergleich zu dem ersten Einzelteil niedrigere Härte auf. Hierdurch wird eine bessere Haftung erzielt, sofern die Materialviskositäten so abgestimmt sind, dass sich Teile des Polymers des Beutels an der Oberfläche des Stopfens befinden oder das Polymer der Außenschicht (C) niedermolekulare Bestandteile aufweist. Daher kann man die Erfindung prinzipiell an unterschiedliche Wärmebehandlungen bei verschiedenen Temperaturen "angepasst" werden.

Die Temperatur, die für die Erweichung der an der Oberfläche der zu verbindenden Teile von besonderem Interesse ist, also die Temperatur der Wärmebehandlung, ist diejenige Temperatur, unter der üblicherweise die Sterilisation bzw. Dampfsterilisation vorgenommen wird. Hierbei wird im Rahmen der Erfindung unter Dampfsterilisation allgemein ein Verfahren zur Abtötung bzw. Inaktivierung (Viren) aller Mikroorganismen einschließlich der hochresistenten Dauerform verstanden, wobei die erfindungsgemäßen Materialien insbesondere einer Dampfsterilisation im Autoklaven mit Wasserdampf von mindestens 116°C, entsprechend etwa einer Atmosphäre Überdruck, der so genannten Autoklavierung oder Autoklavierungsbehandlung unterzogen werden können, ohne dabei Schaden zu nehmen. Gemäß einer allgemeinen Ausführungsform der Erfindung wird die Wärmebehandlung bei einer Temperatur im Bereich von 90 bis 130°C, bevorzugt im Bereich von 116 bis 121°C durchgeführt. Diese Temperaturen sind ausreichend um einen fluiddichten, festen und dauerhaften Sitz des Stopfens zu gewährleisten.

Gemäß einer allgemeinen Ausführungsform der Erfindung ist der Stopfen in Bezug auf seine Größe auf eine am Beutel angebrachte Führungshülse bzw. einen am Beutel angebrachten Schlauchport abgestimmt. Der Stopfen hat dabei einen Durchmesser im Bereich von 3 bis 15 mm, bevorzugt im Bereich von 6 bis 9 mm auf. Der Durchmesser des Stopfens kann dabei so gewählt werden, dass dieser dem Innendurchmesser der Hülse/des Schlauches entspricht. Kann jedoch auch so dimensioniert sein, dass es zu einer Aufweitung der Hülse/des Schlauches kommt, wenn der Stopfen platziert ist. Die Länge des erfindungsgemäßen Stopfens ist variabel und variiert im Bereich von 3 bis 15 mm, bevorzugt im Bereich von 5 bis 8 mm.

Gemäß einer Ausführungsform der Erfindung weist der Stopfen zumindest an einer seiner Stirnseiten eine Einkerbung auf, welche beispielsweise das Einstechen und Herausziehen einer Nadel erleichtert und auch eine Zerstörung der Oberfläche verringert. Auch wird durch diese Einkerbung(en) das sichere, das heißt fluiddichte Wiederverschließen des Stopfens auch nach mehrmaligem Einstechen und Herausziehen mit einer Nadel oder einem Spike gewährleistet. Die Tiefe dieser Einkerbung(en) ist variabel, kann allgemein im Bereich von 1 bis 3 mm variieren und beträgt bevorzugt 1 mm. Gemäß einer Ausführungsform der Erfindung liegt diese Einkerbung in Form eines "Y" bzw. "X" vor. Die Einkerbung(en) können dabei nur an der dem Beutel abgewandten Stirnseite oder an beiden Stirnseiten des Stopfens vorliegen. Gemäß einer Ausführungsform der Erfindung sind an den gegenüberliegenden Stirnseiten Y-förmige Einkerbungen vorhanden, die in einem Winkel im Bereich von 30 bis 180°, bevorzugt in einem Winkel von 180° zueinander angeordnet sind. Diese Einkerbungen erleichtern das Einstechen einer Kanüle in den erfindungsgemäßen Stopfen und unterstützen einen nahezu dichten Abschluss des Kernmaterials nach dem Herausziehen auch bei mehrmaligem Einstechen mit einer Kanüle oder eines Spikes.

Gemäß einer weiteren Ausführungsform der Erfindung ist zumindest eine Stirnseite des erfindungsgemäßen Stopfens zumindest abschnittsweise mit einer Folie bedeckt, die vorzugsweise mit der Außenschicht des Stopfens (C) oder dem Kern (A) fest verbunden, bevorzugt verschweißt ist. Diese Folie ist dabei bevorzugt aus einem Material hergestellt, welches zur Herstellung von Folienbeuteln geeignet ist, bevorzugt entspricht diese dem Beutelmaterial, und gewährleistet eine flüssigkeitsdichte Abschirmung des Beutelinhalts von den Materialien des Stopfens. Hierdurch wird sichergestellt, dass migrierfähige Bestandteile des Stopfenmaterials wie Weichmacher nicht in die Flüssigkeit im Beutel gelangen können. Gemäß einer mehr bevorzugten Ausführungsform der Erfindung ist die Innenschicht des Folienbeutelmaterials dabei zum Beutelinnern hin ausgerichtet.

Ein weiterer Gegenstand der vorliegenden Erfindung ist ein Verfahren zur Herstellung des erfindungsgemäßen Stopfens, umfassend die folgenden Verfahrensschritte:
(a) Herstellen eines mehrschichtigen Stranges durch Coextrusion der Kunststoffe für die Schichten (A) und (C) gegebenenfalls (B),
(b) gegebenenfalls Abkühlen des in Schritt (a) hergestellten Stranges, und gegebenenfalls Aufwickeln zu einem Coil,
(c) gegebenenfalls Aufbringen einer Einkerbung,
(d) gegebenenfalls Beschichten der Stirnseite des Stranges mit einer Folie,
(e) Schneiden des Stranges auf die gewünschte Länge des Stopfens,
(f) gegebenenfalls Aufbringen einer weiteren Einkerbung, und
(g) gegebenenfalls Beschichten der Stirnseite mit einer Folie als Orginalitätsverschluss.

Gemäß einer weiteren Ausführungsform der Erfindung wird der erfindungsgemäße Stopfen zum Verschließen eines medizinischen Systems, insbesondere zum Verschließen bzw. zum Herstellen eines medizinischen Beutels verwendet. Das Verfahren zum Verschließen bzw. Herstellen des medizinischen Beutels umfasst dabei die folgenden Verfahrensschritte:
(a*) Bereitstellen des erfindungsgemäßen Stopfens, der gegebenenfalls mit einer oder zwei Einkerbung(en) und gegebenenfalls mit einer oder zwei Beschichtung(en) versehen ist, und zweier Beutelfolien,
(b*) Platzieren des Stopfens zwischen den zwei Beutelfolien,
(c*) Herstellen des medizinischen Beutels durch Verschweißen der Beutelfolien und Verschweißen und Durchführen einer Wärmebehandelung zum Verbinden des Stopfens mit dem Beutel, und
(d*) Gegebenenfalls Beschichten der äußeren Stirnseite des Stopfens mit einer Folie als Originalitätsverschluss.

Hierdurch wird auf einfache Art und Weise ein medizinischer Beutel erhalten, wobei über den eingearbeiteten Stopfen Flüssigkeit zwischen dem Innern und Äußeren des Beutels ausgetauscht werden kann.

Der medizinische Beutel kann auch durch Blasformen des Beutels um den erfindungsgemäßen Stopfen herum und Durchführen einer Wärmebehandlung hergestellt werden. Nach dem Blasformen, das üblicherweise bei hohen Temperaturen > 90°C durchgeführt wird, schließt der Stopfen fluiddicht und dauerhaft mit dem Folienmaterial ab.

Zum Erreichen einer dauerhaften und fluiddichten Verbindung zwischen dem Stopfen und dem Beutel ist es gemäß einer weiteren Ausführungsform der Erfindung von Vorteil, wenn der erfindungsgemäße Stopfen an der Kontaktstelle zu dem Beutelmaterial eine Lippe aufweist, die an den Stopfen anextrudiert ist. Gemäß einer weiteren Ausführungsform der Erfindung kann diese Lippe auch thermisch aufgepresst sein. Ebenfalls ist es von Vorteil, wenn der Stopfen eine Bootform aufweist.

Ein weiterer Aspekt der Erfindung ist ein Verfahren zum Verschließen eines medizinischen Systems, insbesondere eines medizinischen Beutels mit Hilfe des erfindungsgemäßen Stopfens umfassend die folgenden Verfahrensschritte:
(a') Bereitstellen des medizinischen Systems und des Stopfens bzw. des Stopfenstranges,
(b') Einführen des erfindungsgemäßen Stopfens in eine Öffnung des medizinischen Systems,
(c') gegebenenfalls Beschichten der anderen Stopfenseite mit einer Folie als Originalitätsverschluss.
(d') Durchführen einer Wärmebehandlung zum Verbinden des Außenschicht (C) des Stopfens und des medizinischen Systems.

Zur sterilen Abdeckung der Öffnung, die nun mit dem erfindungsgemäßen Stopfen verschlossen ist, wird eine Abreißfolie als Originalitätsverschluss aufgebracht. Die Öffnung des medizinischen Systems kann dabei beispielsweise eine Öffnung in der Beutelfolie oder ein Schlauchport sein.

Der erfindungsgemäße Stopfen kann bündig mit der Oberfläche der Öffnung abschließen, gemäß einer weiteren Ausführungsform der Erfindung auch um einen Bereich von 1 bis 10 mm zurückversetzt sein, wodurch das Einstechen in den Stopfen beispielsweise mit einer Kanüle oder einem Spike erleichtert wird.

Die Wärmebehandlung in Verfahrensschritt (d') kann ein Hitze-Sterilisationsvorgang sein, der bereits vorstehend beschrieben wurde.

Gemäß einer bevorzugten Ausführungsform der Erfindung wird als medizinisches System ein Folienbeutel verwendet. Der Stopfen wird dabei in Form eines Stranges bereitgestellt, der einer Beutelherstellungsmaschine direkt zugeführt, und erst unmittelbar vor Schritt (b'), das heißt vor dem tatsächlichen Einführen des Stopfens in den Schlauchport eines Beutels auf die gewünschte Länge zugeschnitten. Vorteilhafterweise wird hierdurch das Verschließen des medizinischen Systems, insbesondere des Beutels, stark vereinfacht. Verfahrensschritte wie das Vereinzeln, Vorsortieren und Ausrichten der üblicherweise vorgeschnittenen Stopfen sind dabei nicht notwendig, da der Stopfen in Form des Stranges vor dem Zuschneiden zielgenau der Öffnung des medizinischen Systems zugeführt werden kann. Der Stopfgenstrang kann ebenfalls auch erst unmittelbar nach Schritt (b') auf Länge geschnitten werden.

Dem erfindungsgemäßen Verfahren zum Verschließen eines medizinischen Systems, insbesondere eines medizinischen Beutels, kann dabei die Herstellung des medizinischen Beutels mit dem folgenden Schritt vorangehen
(a¹) Herstellen eines medizinischen Beutels durch Einschweißen eines Schlauches zwischen zwei Folien, aus denen in einem weiteren Herstellungsschritt der medizinische Beutel hergestellt wird.

Zum Erreichen einer dauerhaften und fluiddichten Verbindung zwischen dem Schlauch und dem Beutel ist es dabei von Vorteil, wenn der Schlauch an der Kontaktstelle zu dem Beutelmaterial im Bereich der Ebene zwischen der Ober- und Unterbahn der Folien eine Lippe aufweist, die an den Schlauch anextrudiert ist. Gemäß einer weiteren Ausführungsform der Erfindung kann diese Lippe auch thermisch aufgepresst sein. Derartige Lippenschläuche sind dem Fachmann bekannt.

Die Erfindung umfasst ferner eine Vorrichtung zur Durchführung des vorstehend beschriebenen Verfahrens, sowie ein medizinisches System, welches mit Hilfe des erfindungsgemäßen Verfahrens hergestellt werden kann.

Die Erfindung wird anhand der nachfolgenden Beispiele näher erläutert werden:

### Beispiel 1

### Extrusion eines Stopfens auf einer Mehrschichtextrusionsanlage

Ein Stopfenstrang wird auf einer Mehrschichtextrusionsanlage mit Wasserkühlkalibrierung mit einem Durchmesser von 8 mm wie folgt hergestellt:
- A (Kern):: - 45er Extruder mit Scher-/Mischteilschnecke, Ausstoß 15 kg/h
- Material APP 304 von Polycine, Deutschland
- Prozesstemperaturen 200°C

### B (Zwischenschicht): - keine

- C (Außenschicht):: - 30er Extruder mit Scher-/Mischteilschnecke, Ausstoß 1 kg/h
- Prozesstemperatur 200°C
- Material APP 306 von Polycine, Deutschland

Der coextrudierte Stopfenstrang wird als Coil mit einer Länge von etwa 400 m aufgewickelt.

### Beispiel 2

### Aufbringen Y-förmiger, 1 mm tiefer Einkerbungen in einen Stopfen

Der Stopfenstrang, hergestellt nach Beispiel 1, wird auf einer FFS-Maschine zur Herstellung von medizinischen Folienbeuteln weiterverarbeitet. Dabei wird der Stopfenstrang an den Stirnseiten eingekerbt, die zum Beutelinneren gerichtete Stirnseite mit einem Stück Beutelfolie verschweißt und bündig gestanzt. Anschließend wird der Stopfen mit der beschichteten Seite voran in den Schlauchport des Stopfens eingefügt und eine Aluminium/PP-Folie als Originalitätsverschluss auf die aus dem Beutel ragende, nicht beschichtete Stirnseite des Stopfens und die Schlauchumrandung aufgebracht und verschweißt. Dabei schließen Stopfen und Schlauchport, der aus dem Material APP1 07-S von Polycine, Deutschland gefertigt ist, bündig ab. Das Verschweißen funktioniert mittels herkömmlichen Thermoschweißverfahrens mit einer Temperatur von 120-150°C. Die Schweißfestigkeit kann dabei über die Schweißtemperatur, den Druck und die Schweißzeit eingestellt werden. Üblicherweise liegt die Schweißzeit im Bereich von 0,5 bis 4, bevorzugt im Bereich von 1 bis 3, besonders bevorzugt bei 2 Sekunden. Die Wärmebehandlung des verschlossenen Beutels bei 121°C, unter üblichen Sterilisierungsbedingungen.

### Beispiel 3

### Herstellung eines weiteren Stopfenstrangs und Verschließen eines medizinischen Beutels

Analog zu Beispiel 1 wird ein Stopfenstrang mit einem Durchmesser von 6 mm wie folgt hergestellt:
- A (Kern):: - Material APP 304 von Polycine, Deutschland
- Ausstoß 12 kg/h
- Prozesstemperatur 220°C

### B (Zwischenschicht): - keine

- C (Außenschicht):: - Material APP310 von Polycine, Deutschland
- Prozesstemperatur 190°C
- Verschließen des Beutels mit dem Stopfen gemäß Beispiel 3

Die Stirnseite des Stopfenstrangs wird mit einer X-förmigen, 0,5 mm tiefen Einkerbung versehen, und ein Stopfen auf eine Länge von 8 mm geschnitten. Die Stirnseite dieses Stopfens, welche zum Beutelinneren hin ausgerichtet ist, wird mit einer APP 114-Folie, deren Innenschicht zum Beutelinneren gerichtet ist, versehen. Der Stopfen wird daraufhin in den Schlauchport eines medizinischen Beutels eingeführt und so platziert, dass er 1 mm von der Schlauchportabschlusskante zurückversetzt ist. Anschließend wird ein Originalitätsverschluss aus PET/PP-Folie auf den Schlauchport formbündig, insbesondere tiefgezogen aufgebracht. In einem darauf folgenden Sterilisierungsvorgang bei 121°C wird der Stopfen mit dem Schlauchport verbunden.

### Beispiel 4

Herstellung eines weiteren Stopfenstrangs in Anlehnung an das Verfahren nach Beispiel 1 mit einem Durchmesser von 7 mm
- A (Kern):: - Material APP 304 von Polycine, Deutschland
- Ausstoß 14 kg/h
- Prozesstemperatur 220°C
- B (Zwischenschicht):: Material APP 310
- Ausstoß 1 kg/h
- Prozesstemperatur 220°C
- C (Außenschicht):: Material Polypropylen, APP 305 von Polycine, Deutschland
- Ausstoß 2 kg/h
- Prozesstemperatur 190°C

## Patentansprüche

1. Stopfen mit zwei gegenüberliegenden Stirnseiten zum Verschließen eines medizinischen Systems, wobei der Stopfen einen Kern sowie gegebenenfalls eine oder mehrere den Kern umgebende Schicht(en) umfasst, und der Stopfen
A einen Kern aus einem Kunststoffmaterial aus einem oder mehreren Polymeren mit einem hohen Rückstellvermögen ausgewählt aus Polyphenylenoxid, Polyethylen-Copolymeren, Ethylenvinylacetat (EVA), Styrol/Ethylen/Butylen-Block-Copolymerisat (SEB), Styrol/Ethylen/Propylen-Copolymerisat (SEP), Polypropylen (PP), medizinischem Weißöl, Styrol/Butadien/Styrol-Copolymerisat (SBS), Polybutylen (PB), Ethylen/Propylen/Dien-Kautschuk (EPDM), Ethylen/Propylen-Kunststoff und Styrol/Butadien/Styrol-Block-Polymerisat (SBS),
B gegebenenfalls eine oder mehrere Zwischenschicht(en) aus einem Kunststoffmaterial aus einem oder mehreren Polymeren ausgewählt aus funktionalisiertem Polypropylen (PP), Polyethylen (PE), funktionalisiertem Styrol/Ethylen/Butylen-Block-Copolymerisat (SEB), Polyethylen-Plastomer, Polyethylencopolymer, Ethylen/Vinylacetat (EVA), Styrol/Ethylen/Propylen-Copolymerisat (SEP), Öl, Polypropylen (PP), Polyethylen (PE), Styrol/Isopren/Styrol-Block-Copolymerisat (SIS), Polybuten (PB), und
C gegebenenfalls eine Außenschicht aus einem Kunststoffmaterial aus einem oder mehreren Polymeren ausgewählt aus Polypropylen, Polyester, Polycarbonat, Polyethylen-Copolymer, Polyethylen-Plastomer, Ethylenvinylacetat (EVA), PCCE oder SEB/SEP, PMP, PB, Weich-PVC (PVC-W) oder Mischungen dieser, umfasst,
wobei das Material des Kerns (A) bei Abwesenheit der Außenschicht (C) oder das Material der Außenschicht (C) des Stopfens bei Temperaturen von größer 90°C fließfähig ist.

2. Stopfen nach Anspruch 1 mit einem Durchmesser im Bereich von 3 bis 15 mm und einer Länge im Bereich von 3 bis 15 mm.

3. Stopfen nach Anspruch 1 oder 2, wobei der Stopfen zumindest auf einer Stirnseite eine 1 bis 3 mm tiefe Einkerbung aufweist.

4. Stopfen nach Anspruch 3, wobei die Einkerbung die Form eines "Y" hat.

5. Stopfen nach Anspruch 4, wobei auf beiden Stirnseiten des Stopfens eine "Y"-förmige Einkerbung vorhanden ist, die in einem Winkel im Bereich von 30 bis 180° zueinander angeordnet sind.

6. Stopfen nach einem der Ansprüche 1 bis 5, wobei zumindest eine Stirnseite des Stopfens mit einer Folie aus einem Material welches sich zur Herstellung eines medizinischen Beutels eignet zumindest abschnittsweise bedeckt ist.

7. Stopfen nach Anspruch 6, wobei die Folie mit der Außenschicht (C) des Stopfens verklebt oder verschweißt ist.

8. Verfahren zum Herstellen eines Stopfens nach einem der Ansprüche 1 bis 7, umfassend die folgenden Verfahrensschritte:
(a) Herstellen eines mehrschichtigen Stranges durch Coextrusion der Kunststoffe für die Schichten (A), (C) und gegebenenfalls (B),
(b) gegebenenfalls Abkühlen des in Schritt (a) hergestellten Stranges, und gegebenenfalls Aufwickeln zu einem Coil
(c) gegebenenfalls Aufbringen einer Einkerbung,
(d) gegebenenfalls Beschichten der Stirnseite des Stranges mit einer Folie,
(e) Schneiden des Stranges auf die gewünschte Länge des Stopfens,
(f) gegebenenfalls Aufbringen einer weiteren Einkerbung, und
(g) gegebenenfalls Beschichten der anderen Stirnseite des Stopfens mit einer Folie als Originalitätsverschluss

9. Verfahren zum Herstellen eines medizinischen Beutels umfassend die Verfahrensschritte:
(a*) Bereitstellen des Stopfens nach einem der Ansprüche 1 bis 7, der gegebenenfalls mit einer oder zwei Einkerbung(en) und gegebenenfalls mit einer oder zwei Beschichtung(en) versehen ist, und zweier Beutelfolien,
(b*) Platzieren des Stopfens zwischen den zwei Beutelfolien,
(c*) Herstellen des medizinischen Beutels durch Verschweißen der Beutelfolien, sowie Verschweißen und Durchführen einer Wärmebehandelung zum Verbinden des Stopfens mit der Beutelfolie, und
(d*) gegebenenfalls Beschichten der äußeren Stirnseite des Stopfens mit einer Folie als Originalitätsverschluss.

10. Verfahren zum Herstellen eines medizinischen Beutels umfassend die Verfahrensschritte:
(a*) Bereitstellen eines Stopfens, dessen Außenschicht (C) aus einem Material hergestellt ist, das ausgewählt ist aus Polyester, Polycarbonat und PMP, und der gegebenenfalls mit einer oder zwei Einkerbung(en) und gegebenenfalls mit einer oder zwei Beschichtung(en) versehen ist, und zweier Beutelfolien,
(b*) Platzieren des Stopfens zwischen den zwei Beutelfolien, wobei die zum Stopfen zeigende Fläche der Beutelfolie ein Material umfasst, welches bei Temperaturen von größer 90°C fließfähig ist,
(c*) Herstellen des medizinischen Beutels durch Verschweißen der Beutelfolien, sowie Verschweißen und Durchführen einer Wärmebehandelung zum Verbinden des Stopfens mit der Beutelfolie, und
(d*) gegebenenfalls Beschichten der äußeren Stirnseite des Stopfens mit einer Folie als Originalitätsverschluss.

11. Verfahren nach Anspruch 9 oder 10, wobei die Wärmebehandlung ein Hitzesterilisationsvorgang ist.

12. Verfahren nach einem der Ansprüche 9 bis 11, wobei der Stopfen in Form eines Stranges bereitgestellt wird und dieser unmittelbar vor Schritt (b') oder (a*) auf die gewünschte Länge geschnitten wird.

13. Verfahren nach einem der Ansprüche 9 bis 12, wobei der Stopfen unmittelbar vor dem Einführen in die Öffnung des medizinischen Systems an zumindest einer der Stirnseiten mit einer Folie versehen wird.

14. Verfahren nach einem der Ansprüche 9 bis 13, ferner umfassend Verfahrensschritt
(a¹) Herstellen eines medizinischen Beutels durch Einschweißen eines Schlauches zwischen zwei Folien, aus denen in einem weiteren Herstellungsschritt der medizinische Beutel hergestellt wird.

15. Verfahren nach Anspruch 14, wobei ein Schlauch oder Bootport verwendet wird, der an der Kontaktstelle zu dem Beutelmaterial eine Lippe oder eine Bootform aufweist.
